# EUROPÄISCHE PATENTANMELDUNG

(11) **EP 4 475 142 A1**
(43) Veröffentlichungstag der Anmeldung: **11.12.2024**
(21) Anmeldenummer: 24176274.9
(22) Anmeldetag: 16.05.2024
(51) Int. Cl.: H01B 3/30, H01B 3/46, H02K 3/30, H02K 47/02, H02M 1/00

(54) **VERWENDUNG EINER ISOLATION FÜR ÜBER STROMRICHTER BETRIEBENE ELEKTRISCHE MASCHINEN, ELEKTRISCHE MASCHINE DAZU**

(30) Priorität: 05.06.2023 DE 102023205238
(71) Anmelder: Siemens Mobility GmbH, 81739 München (DE)
(72) Erfinder: Körner, Olaf, 90469 Nürnberg (DE); Schemmel, Florian, 90455 Nürnberg (DE)
(74) Vertreter: Siemens Patent Attorneys

(57) **Zusammenfassung**

Die Erfindung betrifft eine Verwendung einer Isolation einer elektrischen rotierenden Maschine in Kombination mit bestimmten Stromrichtern, insbesondere mit IGBT und/oder Siliziumcarbid "SiC" basierten Stromrichtern, wie sie z.B. zum Antrieb von Schienenfahrzeugen eingesetzt werden, sowie eine damit ausgerüstete elektrische rotierende Maschine. Die hier im Fokus stehenden elektrischen rotierenden Maschinen haben bislang alle stark Glimmer-haltige Isolationen, mit Anteilen an Glimmerpapier von 45Vol% oder mehr. Insbesondere sind elektrische rotierende Maschinen, welche nach IEC 60034-18-42 unter Auftreten von Teilentladungen betrieben werden, Gegenstand der vorliegenden Anmeldung. Durch die hier erstmals vorgeschlagene Kombination ist es möglich, bei Isolationen von über Stromrichter in IGBT-Technik oder auf Halbleiter mit Bandabstand größer Silizium-Basis wie z.B. SiC und/oder GaN-technischer Basis, betriebene rotierende elektrische Maschinen, wie Traktionsmotoren, Glimmer zu reduzieren, respektive auf Glimmer weitgehend oder ganz zu verzichten.

## Beschreibung

Die Erfindung betrifft eine Verwendung einer Isolation einer elektrischen rotierenden Maschine in Kombination mit bestimmten Stromrichtern, insbesondere mit IGBT und/oder Siliziumcarbid "SiC" basierten Stromrichtern, wie sie z.B. zum Antrieb von Schienenfahrzeugen eingesetzt werden, sowie eine damit ausgerüstete elektrische rotierende Maschine. Die hier im Fokus stehenden elektrischen rotierenden Maschinen haben bislang alle stark Glimmer-haltige Isolationen, mit Anteilen an Glimmerpapier von 45Vol% oder mehr. Insbesondere sind elektrische rotierende Maschinen, welche nach IEC 60034-18-42 unter Auftreten von Teilentladungen betrieben werden, Gegenstand der vorliegenden Anmeldung.

Dies hat vor allem einen Effekt auf die Nachhaltigkeit der Motoren, da Glimmer ein Naturprodukt ist, das unter anderem im Norden Indiens abgebaut wird. Nicht nur der weite Transportweg ist dabei nachteilig, sondern auch gesellschaftspolitisch ist der Abbau von Glimmer im Norden Indiens fragwürdig, weil die Abbau-Regionen Jharkhand und Bihar politisch instabil sind und die Arbeitsbedingungen dort entsprechend fragwürdig. Durch Reduktion des Glimmers in den Isolationen bei gleichzeitiger Beibehaltung oder sogar Erhöhung der Belastbarkeit der Isolationen können die Lieferketten gesichert und der Lieferweg verkürzt und die Verfügbarkeit erhöht werden, wenn das synthetische Material z.B. in Deutschland oder Europa hergestellt wird.

Ein IGBT-Leistungsmodul ist ein Stromrichter und im Aufbau ein Bipolartransistors mit isolierter Gate-Elektrode engl. "Insulated-Gate Bipolar Transistor kurz "IGBT".

Ein SiC-basierter Stromrichter ist ein Siliziumkarbid-Stromrichter, der auf einer kompakten und robusten Leistungshalbleiter-Technik basiert.

Es sind Isoliersysteme und Materialien für Isolationen von mit Stromrichter wie Umrichter und Wechselrichter betriebene elektrische rotierende Maschinen wie Generatoren und Motoren auf Basis von Glimmer mit Epoxidharz sowie anderen Duromeren als Epoxidharz aber in der Regel immer stark Glimmer-haltig, bekannt.

Insbesondere in Stromrichter gespeisten Traktionsmotoren liegen glimmerbasierte Isoliersysteme vor, die mit begrenzter Spannungsbelastung betrieben werden.

Isoliersysteme von mit Stromrichtern betriebenen elektrischen Maschinen können aufgrund der hohen Temperaturbelastung, wie z.B. Wärmeklassen 180 und insbesondere Wärmeklasse 200 und höher, keinen Glimmschutz nutzen, da für diese hohen Wärmeklassen kein Material verfügbar ist. Glimmschutzsysteme unterbinden äu-ßere Teilentladungen, dadurch steigt die Teilentladungseinsetzspannung und das Isoliersystem lässt sich bei höheren Spannungen betreiben, als sie es ohne Glimmschutz möglich wären.

Damit ein Hersteller eines Traktionsmotors seine Isolation für den Betrieb an Stromrichtern betriebssicher auslegen kann, wird die Spannungssteilheit berücksichtigt. Beim schnellen Schalten von Stromrichtern entstehen an elektrischen Maschinen hohe Spannungsspitzen, die die Isolation schädigen können. Durch Reflexion zwischen Stromrichter und elektrischer Maschine, insbesondere Motor, können diese Spannungsspitzen in Abhängigkeit der Schaltgeschwindigkeit der Stromrichter, insbesondere Wechselrichter am Motoreingang, nahezu das Doppelte der Werte am Stromrichterausgang erreichen. Da die Spannungsspitzen nicht symmetrisch an den Windungen der Motorwicklung anfallen, treten die höchsten Belastungen zwischen den ersten Windungen der Motorwicklung auf. Die Belastungen hängen nicht nur von der Schaltgeschwindigkeit, sondern auch von der Sprunghöhe ab. Besonders relevant sind dabei die Leiter-Erde-Spannungen an den Motoranschlüssen.

Die Spannungssteilheit sind aufgrund der IBGT-Wechselrichtertechnologie "IBGT-WR-Technologie" auf 5kV/us begrenzt. Bei begrenzter Kabellänge führt das zu moderaten Spannungsreflexionen am Klemmenkasten einer elektrischen Maschine, was wiederum zu einer moderaten Spannungsbelastung durch Reflexionen am Isoliersystem führt. Beispielsweise bei Industrie-Antriebstechnik treten Kabellängen von einigen 10 bis zu mehreren 100 m auf, bei Traktionsmotoren, beispielsweise Bahn-Antriebstechnik ist die Kabellänge meistens definiert und beträgt insbesondere bis zu 15 m bei Loks.

So sind Isoliersysteme im Industriebereich in der Regel auf Vollreflexion ausgelegt. Bei der elektrischen Auslegung von Traktionsisoliersystemen, insbesondere bei Schienenfahrzeugen, nutzt man folglich die kurze Kabellänge und die moderaten Spannungs-Anstiegszeiten von IGBT-WR-Technologie.

Die nächste Generation von Wechselrichtertechnologie beruht jedoch auf Stromrichtern auf Basis eines Halbleiters dessen Bandabstand größer als der von Silizium ist, wie z.B. Siliziumcarbid (SiC). Hierbei wird die Spannung mit deutlich schnelleren Anstiegszeiten geschaltet (dU/dt = 10 .. 30 kV/us). Zudem takten diese Stromrichter bei deutlich höheren Frequenzen.

Dies führt bei traktionstypischen Kabellängen bereits zu Spannungs-Vollreflexionen und somit zu einer deutlich höheren Spannungsbelastung von ca. 60% bei Grundfrequenz und ca. 100% bei Impulsfrequenz auf die Isolierstrecken Leiter-Erde sowie die Phasenisolierung. Die Potentialdifferenz an der Windungsisolierung würde bei gleicher Windungszahl um ca. 130% steigen. Diese erhöhten Spannungsbelastungen würden zudem noch mit höherer Taktfrequenz aufgebracht werden und somit zu beschleunigter elektrischer Alterung führen. Dies führt nicht nur bei elektrischen Maschinen wie Traktionsmotoren, sondern auch bei Industriemotoren zu großen Problemen hinsichtlich der Lebensdauer.

Bislang wird, um die Isoliersysteme für die SiC-Spannungsbelastungen zu dimensionieren, die elektrische Feldstärke an den betroffenen Isolierstrecken durch eine Erhöhung der Isolationsdicke gesenkt. Aufgrund der fehlenden Verfügbarkeit eines Glimmschutzsystems für die hohe thermische Ausnutzung im Traktionsbereich ist dies die einzige Möglichkeit bei glimmerbasierten Isoliersystemen. Die Windungsisolierung wird durch eine Begrenzung der zulässigen Windungszahl entlastet.

Diese Maßnahme führt jedoch zu einem größeren Wärmewiderstand bei der Wärmeabfuhr von Kupferverlusten. Zudem wird in der Regel der Kupferquerschnitt gesenkt, um das erhöhte Isolationsvolumen zu kompensieren. Dieser reduzierte Cu-Querschnitt führt folglich zusätzlich zu erhöhten Kupferverlusten. Als Konsequenz kann die elektrische Maschine bei gleicher Baugröße nur geringer ausgenutzt werden. Die höhere Windungszahl der Spulen begrenzt zusätzlich die Designfreiheit der elektrischen Auslegung.

Aufgabe der vorliegenden Erfindung ist es daher, eine verbesserte Kombination eines Isolationsmaterials der elektrischen rotierenden Maschine mit einem Stromrichter entsprechend der nächsten Generation an Wechselrichtertechnologie zur Verfügung zu stellen.

Diese Aufgabe wird durch den Gegenstand der vorliegenden Erfindung, wie er in der Beschreibung und in den Ansprüchen definiert ist, gelöst.

Dementsprechend ist Gegenstand der vorliegenden Erfindung eine Verwendung einer Isolation, die einen polymeren Blend mit einem Siloxan-modifizierten Thermoplasten umfasst für eine, über einen Stromrichter auf IGBT-Silizium- und/oder Halbleiter mit Bandabstand größer Silizium-Basis, betriebene, elektrische rotierende Maschine.

Außerdem ist Gegenstand der vorliegenden Erfindung eine über einen derartigen Stromrichter betriebene elektrische Maschine mit einer Isolation, die einen polymeren Blend mit einem Siloxan-modifizierten Thermoplasten umfasst.

Allgemeine Erkenntnis der Erfindung ist es, dass Isolationen von Elektromotoren und anderen elektrischen rotierenden Maschinen, die über Stromrichter, wie z.B. auf IGBT-Silizium-Basis oder solchen auf Basis eines Halbleiters dessen Bandabstand größer als der von Silizium ist, wie z.B. SiC-, Se-, AlAs-, GaN-, TiO2-, CdSe-, CdTe-, ZnS-, ZnAs-, ZnO-, AlSb-Basis, die auf Werkstoffen aus Siloxan modifizierter Thermoplast-Basis aufgebaut sind, deutlich bessere Belastbarkeit zeigen. Insbesondere glänzt diese bislang unbekannte Kombination durch längere elektrische Lebensdauer und/oder Verwendbarkeit bei höheren elektrischen Feldstärken, verglichen mit den herkömmlichen Siloxanfreien auf Duromer-Basis und ohne Thermoplasten gemachten Isolationen von mit den genannten Stromrichtern betriebenen rotierenden elektrischen Maschinen, insbesondere Traktionsmotoren, wiederum speziell auch Traktionsmotoren für Schienenfahrzeuge.

Insbesondere haben elektrische Lebensdaueruntersuchungen der Isolationen bei über Stromrichter betriebenen elektrischen Maschinen unter Impulsspannung gezeigt, dass eine reine Isolierfolie aus - gemäß einem Ausführungsbeispiel der Erfindung - ausgewähltem Polyetherimid-Siloxan Copolymer eine um den disruptiven Faktor 200..250 längere Lebensdauer besitzt als das bisher übliche Glimmerlaminat aus Glimmerplättchen und duromeres Harz, insbesondere ungesättigtes Polyesterimid-Harz "UPI" und/oder Epoxidharz als Isolation von Traktionsmotoren bei Schienenfahrzeugen.

Unter den "herkömmlichen, Siloxan-freien auf Duromer-Basis und ohne Thermoplasten" gemachten Isolationen werden die bekannten auf dem Markt erhältlichen Isolationen verstanden. Diese sind insbesondere auch auf Basis UP "ungesättigtes Polyesterharz" gemacht, wie UP-, UPI- und/oder EP-Harze im Verbund mit 45 Vol% oder mehr Glimmerpapier.

In der hier in der Kombination vorgesehenen Isolation liegen im Material beispielsweise 3 Blendpartner vor, das Siloxan-modifizierte Copolymer, ein amorpher Thermoplast und ein teilkristalliner Thermoplast.

Als amorpher Thermoplast wird beispielsweise PEI und/oder ein amorphes schwefelhaltiges Polymer eingesetzt. Als teilkristalliner Thermoplast beispielsweise ein PEK, beispielsweise PEEK und/oder eine beliebige PEK-Mischung.

Es ist vorgesehen, dass die elektrische Maschine, also z.B. der Motor, von einem Stromrichter versorgt wird, dessen Leistungshalbleiter einen größeren Bandabstand als Silizium aufweist. Dies ist beispielsweise ein Stromrichter auf Basis eines so genannten "Halbleiter mit Bandabstand größer Silizium" und dessen Bandabstand daher insbesondere in einem Bereich von ≥ 1,3 eV, beispielsweise ≥ 1,8 eV, bevorzugt ≥ 2,2 eV, liegt. Der Bandabstand von SiC liegt beispielsweise bei bis zu 3,33 eV.

Dies kann beispielsweise problemlos umsetzbar sein durch die Auswahl der Bauform, insbesondere durch die Auswahl des Halbleiters.

Beispielsweise kann der Stromrichter, also der Umrichter, der Wechselrichter etc. ein SiC-Umrichter, ein GaN-Umrichter oder ein Diamant-Umrichter sein, welche allesamt einen Bandabstand größer 1,2 eV und damit natürlich auch größer 1,3eV aufweisen.

Dabei ist unter einem SiC-Umrichter im Sinne der Erfindung ein Umrichter zu verstehen, der einen Siliziumcarbid-Leistungshalbleiter aufweist und weitere Umrichter werden in der Regel ebenfalls entsprechend ihres Halbleitermaterials benannt.

Es sind insbesondere Leistungshalbleiter von Interesse mit Sperrspannungen von 1200 V und insbesondere Sperrspannungen größer oder gleich 1700 V.

Nach einer vorteilhaften Ausführungsform der Erfindung ist der polymere Blend mit Siloxan-modifiziertem Thermoplast nicht nur mit weniger als 30 Vol%, bevorzugt weniger als 20 Vol% und insbesondere bevorzugt weniger als 10 Vol% Glimmer in der fertig ausgehärteten Isolation glimmer-reduziert, sondern sogar Glimmer-frei, also z.B. mit Werten an Glimmer von unter 0,5Vol%.

Dies hat vor allem auch einen positiven Effekt auf die Nachhaltigkeit, da Glimmer ein Naturprodukt ist, das unter anderem im Norden Indiens abgebaut wird. Nicht nur der weite Transportweg ist dabei nicht nachhaltig, sondern auch gesellschaftspolitisch ist der Abbau von Glimmer im Norden Indiens fragwürdig, weil die Abbau-Regionen Jharkhand und Bihar politisch instabil sind und die Arbeitsbedingungen dort fragwürdig sind. Durch Reduktion und insbesondere den Wegfall des Glimmers können die Lieferketten gesichert und der Lieferweg verkürzt und die Verfügbarkeit erhöht werden, wenn das synthetische Material z.B. in Deutschland oder Europa hergestellt wird.

Als "polymeres Blend", "Polymerblend" oder kurz "Blend" werden vorliegend rein physikalische Gemische aus zwei oder mehreren unterschiedlichen Polymeren bezeichnet. Die Eigenschaften der so entstehenden Kunststoffe unterscheiden sich von denen der Ursprungspolymere. Bei dieser rein physikalischen Mischung entstehen keine neuen chemischen Bindungen zwischen den Makromolekülen. Polymerblends werden im Kurzzeichen durch ein zwischen die Bestandteile gesetztes "+" gekennzeichnet, im Gegensatz dazu werden bei Copolymeren fortlaufende Buchstabenfolgen verwendet.

Als "Copolymer" wiederum werden Polymere bezeichnet, die aus zwei oder mehr verschiedenartigen Monomereinheiten zusammengesetzt sind. Dabei kommen statistische Copolymere, Gradientencopolymere, alternierende Copolymere, Blockcopolymere und Pfropfcopolymere vor.

Als Kurzzeichen werden für Polymere, wie sie als Blendpartner hier neben dem Copolymer auf Grundlage von Polyetherimid und Siloxan einsetzbar sind, DIN-genormte, mit dem US-amerikanischen Standard ASTM weitgehend übereinstimmende, Großbuchstabenfolgen bezeichnet. Beispielsweise steht PEK für Polyetherketon und PEI für Polyetherimid.

Nach einer vorteilhaften Ausführungsform umfasst der Siloxan-modifizierte Thermoplast-Blend ein Polyetherimid-Siloxan-Copolymer. Insbesondere vorteilhafterweise ist dieses Copolymer ein Block-Copolymer.

Nach einer vorteilhaften Ausführungsform ist das Polyetherimid-Siloxan-Copolymer ein Block-Copolymer.

Der Anteil an Siloxan im Copolymer liegt im Bereich von 0,1Gew% bis 90Gew%, insbesondere bei 10Gew% bis 60Gew% und insbesondere bei 20Gew% bis 40Gew%, bezogen auf das Gesamtgewicht des Copolymers.

Nach einer vorteilhaften Ausführungsform liegt der atomare Anteil an Silizium-Atomen im Copolymer bei 1 bis 25 %, insbesondere bei 5 bis 15 %.

Nach einer vorteilhaften Ausführungsform der Erfindung ist das Polyetherimid-Siloxan-Copolymer ein Block-Copolymer der allgemeinen Formel (I) 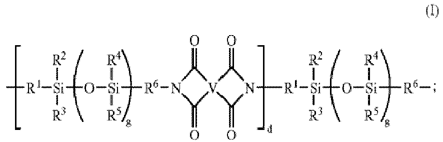 wobei
- **R**¹⁻⁶ gleich oder ungleich sind und ausgewählt aus der Gruppe der
   ∘ substituierten oder unsubstituierten, gesättigten, ungesättigten oder aromatischen Monocyclen mit 5 bis 30 Kohlenstoffatomen,
   ∘ substituierten oder unsubstituierten, gesättigten, ungesättigten oder aromatischen Polycyclen mit 5 bis 30 Kohlenstoffatomen,
   ∘ substituierten oder unsubstituierten, gesättigten Kohlenwasserstoffen mit 1 bis 30 Kohlenstoffatomen,
   ∘ substituierten oder unsubstituierten, ungesättigten Kohlenwasserstoffen mit 2 bis 30 Kohlenstoffatomen;
- **V** steht für eine 4-Valenzen habende Linkergruppe, ausgewählt aus der Gruppe der
   ∘ substituierten oder unsubstituierten, gesättigten, ungesättigten oder aromatischen Monocyclen und Polycyclen mit 5 bis 50 Kohlenstoffatomen,
   ∘ substituierten oder unsubstituierten, gesättigten Kohlenwasserstoffen mit 1 bis 30 Kohlenstoffatomen,
   ∘ substituierten oder unsubstituierten, ungesättigten Kohlenwasserstoffen mit 2 bis 30 Kohlenstoffatomen,
   ∘ sowie beliebig kombinierten Linkergruppen, die zumindest eine der vorgenannten Gruppen umfassen;
- **g** beträgt 1 bis 30 und
- **d** beträgt 2 bis 20.

Nach einer weiteren vorteilhaften Ausführungsform der Erfindung können in dem Copolymer ein oder mehrere Additive, enthalten sein. Beispielsweise können ein oder mehrere Metalloxid(e), wie z.B. TiO₂, Fe₂O₃ und/oder MnFe₂O_{4 und/}oder elektrisch nichtleitfähige Kohlenstoff basierte Füllstoffe, wie z.B. Industrieruß als Additive eingesetzt werden.

Als "Siloxan" wird vorliegend grundsätzlich eine Verbindung mit zumindest einer -Si-O-Si-Einheit verstanden, insbesondere solche, die im Polymer ein Si-O-Si-Rückgrat wie es in Siliconen üblich ist, bilden. Beispielsweise sind ein Polydialkylsiloxan, wie das Polydimethylsiloxan, oder Polydiarylsiloxan, wie das Polydiphenylsiloxan einfache Formen eines Siloxans. Natürlich gibt es auch gemischte Formen von Siloxanen wie beispielsweise ein Polyarylalkylsiloxan.

Als Polyetherimid oder "PEI" wird ein thermoplastischer Kunststoff bezeichnet, der vielfältig einsetzbar ist, weil er hochtemperaturbeständig ist, als flammwidrig eingestuft, weil er geringe Rauchentwicklung zeigt, wenn er dennoch mal brennt. PEI hat hohe Festigkeit, auch hohe elektrisch Durchschlagsfestigkeit, geringes Gewicht und ist gegen UV-Licht und Gammastrahlen beständig. Insbesondere ist PEI als "ULTEM^{®}" handelsüblich.

Insbesondere hat sich das Polyetherimid-Siloxan-Copolymer Siltem^{®} der Firma Sabic hier bewährt.

Nach einer bevorzugten Ausführungsform der Erfindung ist das Polyetherimid-Siloxan-Copolymer mit einem weiteren Thermoplasten modifiziert. Beispielsweise ist das Polyetherimid-Siloxan-Copolymer mit Polyetherimid geblendet vor. Dabei ist insbesondere vorgesehen, dass im Polymerblend das Polyetherimid als amorpher - Hochtemperatur-"HT"-Thermoplast-Blendpartner vorliegt.

Andererseits kann ergänzend oder alternativ zu einem amorphen Blendpartner des Polyetherimid-Siloxan-Copolymers auch ein teilkristalliner thermoplastischer Blendpartner im polymeren Blend vorliegen. Beispielsweise kein ein Polyetherketon als Blendpartner des Polyetherimid-Siloxan-Copolymers oder auch eines Blends aus Polyetherimid-Siloxan-Copolymer und amorphem Polyetherimid "PEI" vorliegen.

"Polyetherketone" -PEK - sind Polymere, in deren molekularen Rückgrat abwechselnd Keton- (R-CO-R) und Etherfunktionalitäten (R-O-R) vorkommen. Gut geeignet sind beispielsweise Polyaryletherketone -PAEK-, bei denen sich zwischen den funktionellen Gruppen jeweils eine in (1,4) -Position verknüpfte Arylgruppe befindet. Das starre Rückgrat der Polyetherketone und insbesondere der Polyaryletherketone, verleiht den Materialien im Vergleich zu anderen Kunststoffen sehr hohe Glasübergangstemperaturen -Tgs- und/oder Schmelzpunkte, weshalb sie als Blendpartner des Isolations-Polymerblend-Materials zum Ersatz von Glimmer durch TE-resistentes Polymermaterial einsetzbar ist.

Geeignete Polyetherketone "PEK"s als Blendpartner sind insbesondere:
- Poly(etheretherketon) - PEEK-,
- Poly(etherketonketon) - PEKK-,
- Poly(etheretheretherketon) - PEEEK -,
- Poly(etheretherketonketon) - PEEKK-,
- Poly(etherketonetherketonketon) -PEKEKK- und/oder
- Polyaryletherketon - PAEK -
sowie beliebige Kombinationen und/oder Mischungen der oben genannten Verbindungen.

Soweit in der Erfindung bereits getestet, sind die genannten Polyetherketone untereinander und mit den beiden anderen Blendpartner, insbesondere auch mit dem Polyetherimid-Siloxan-Copolymer beliebig mischbar und/oder kombinierbar.

Nach einer vorteilhaften Ausführungsform der Erfindung hat sich der Einsatz von einem oder mehreren schwefelhaltigen Polymeren als zusätzliche Blendpartner - jeweils entweder teilkristallin oder amorph - als geeignet erwiesen, unter anderem weil hier eine Folienherstellung und/oder auch die Verarbeitung durch Extrusion ohne nennenswerte Entmischung mit den restlichen Blendpartnern möglich ist und die Teilentladungsresistenz nochmal verbessert wird.

Dabei gibt es sowohl teilkristallin als auch amorph vorliegende schwefelhaltige Polymere, wobei die teilkristallin vorliegenden schwefelhaltigen Polymere so genannte Polysulfone wie z.B.
- Polyphenylensulfid - PPS -
- Polyphenylensulfon - PPSU -
- Polyarylensulfon -PAS-
- Polybisphenylsulfon - PSF-
- Polyethersulfon -PES-
- Polysulfon - PSU-

Beispielsweise kann ein schwefelhaltiger, amorph vorliegender Thermoplast ohne weiteren amorphen Thermoplasten im Blend vorliegen. Beispielsweise PPS, PPSU und PSU sind dafür geeignet.

Die teilkristallinen Polysulfone - manche Polysulfone können amorph oder teilkristallin vorliegen - werden zwar auch vorrangig zur Erhöhung der Teilentladungsresistenz eingesetzt, aber auch wegen der Sphärolithen im Blend, die eine gewissen Rest-Festigkeit oberhalb des Tgs bewirken, so dass die polymeren Bestandteile des Isolationssystems bei Betriebs-Temperaturen oberhalb des Tgs nicht abtropfen, sondern gummiartig im Isolationssystem verbleiben und sich bei Abkühlung wieder verfestigen.

Dabei ist es insbesondere vorteilhaft, wenn die Menge an zugesetztem schwefelhaltigem Polymer im Bereich zwischen 1 Gew% und 45 Gew%, insbesondere zwischen 3 Gew% und 40 Gew% und besonders bevorzugt zwischen 10 Gew% und 35 Gew%, beispielsweise bei 15Gew%, 20 Gew% oder 25 Gew%, liegt.

Die Anzahl von Blendpartnern in der Isolation ist grundsätzlich nicht begrenzt. Es können beispielsweise 2 bis 10 Blendpartner vorliegen, vorzugsweise sind es weniger Blendpartner, beispielweise 2 bis 5, insbesondere 2 bis 4.

Nach einer vorteilhaften Ausführungsform liegen beispielsweise 2 Blendpartner vor insbesondere ein PEK und ein Siloxan-modifizierter Thermoplast. Dabei liegt z.B. der Blendpartner Siloxanmodifizierter Thermoplast mengenmäßig, bezogen auf die fertige Isolation im Bereich 5 Gew% bis 50 Gew%, insbesondere 10 Gew% bis 35 Gew% und bevorzugt im Bereich von 15 Gew% bis 30 Gew% wohingegen der mengenmäßige Anteil des PEK dann im Bereich von 95 Gew% bis 50 Gew%, insbesondere 90 Gew% bis 65 Gew% und besonders bevorzugt im Bereich von 85 Gew% bis 70 Gew%.

Nach einer vorteilhaften Ausführungsform liegen drei Blendpartner, das siloxan-modifizierte Copolymer, ein amorpher und ein teilkristalliner Thermoplast in ungefähr gleichen Masseanteilen im Blend vor, wobei beispielsweise alle drei Partner im Bereich zwischen 15 Gew% und 33 Gew%, insbesondere zwischen 20 Gew% und 30 Gew%, besonders bevorzugt zwischen 23 Gew% und 27 Gew% vorliegen. Der Rest auf 100 % Masseanteile wird dann z.B. über höhere Anteile eines Blendpartners, beispielsweise des teilkristallinen Thermoplast-Blendpartners und/oder über Additive, sonstige Zusätze, die fachnotorisch bekannt und üblich sind, ergänzt.

Nach einer weiteren Ausführungsform des oben genannten Beispiels liegt der teilkristalline Blendpartner mit einem größeren Anteil als die beiden anderen Blendpartner, die nach einer möglichen Ausführungsform in ungefähr gleichen Masseanteilen vorliegen, vor. Dieser in überwiegendem Anteil vorliegende teilkristalline thermoplastische Blendpartner liegt dann beispielsweise im Bereich von 35 Gew% bis 65 Gew%, insbesondere von 40 Gew% bis 60 Gew% im Blend vor.

Nach einer weiteren Ausführungsform liegen 3 Blendpartner vor und der Anteil vom amorphen Thermoplast-Blendpartner liegt im Bereich von 3 Gew% bis 75 Gew%, insbesondere von 10 bis 55 Gew% und besonders bevorzugt im Bereich von 15 Gew% bis 40Gew%.

Die polymeren Blends zeichnen sich vor allem durch eine niedrige Permittivität und hohe Resistenz gegenüber Teilentladungen aus.

Permittivität ist die Polarisationsfähigkeit, eine Materialeigenschaft elektrisch isolierender, polarer oder unpolarer Stoffe, die auch Dielektrika genannt werden.

Permittivität ist neben der Isolationsdicke maßgeblich für die Teilentladungseinsetzspannung einer Isolierung verantwortlich. Glimmerbandbasierte Hauptisolierungen haben aufgrund des hohen polaren Glimmeranteils eine Permittivität von e_{r, 23°C} =4,0..4,5. Bei Polymerblends auf Basis von Polyetherimid-Siloxan Copolymeren liegt die Permittivität bei e_{r, 23°C} =2,8..3,2.

Schätzt man die Teilentladungseinsetzspannung über die Gleichung nach Daisuke Muto (Gleichung 1 in "A Study on Partial Discharge Phenomena of Winding Wires"; Furukawa Review, No. 45 Part 4, 2014) ab, so ließe sich durch eine Isolation eines Stromrichters nach einem Ausführungsbeispiel der Erfindung die Teilentladungseinsetzspannung und somit auch die Spannungsbelastbarkeit um ca. 15% steigern.

Nutzt man folglich ein Isoliersystem, in dem der Glimmeranteil ganz oder teilweise durch ein polymeres Blend gemäß einer Ausführungsform der Erfindung substituiert wurde, in einer elektrischen rotierenden Maschine, die von einem Stromrichter, der auf SiC, Se, AlAs, GaN, TiO2, CdSe, CdTe, ZnS, ZnAs ZnO, AlSb oder sonstiger Halbleiter-Basis-Technologie basiert, gespeist wird, so ließe sich die Erhöhung der Isolationsdicke und der damit verbundene Leistungsverlust der elektrischen Maschine vermeiden.

Vielmehr eröffnen die hier offenbarten Isolationen bei über SiC- oder andere, siehe oben - oder auch IGBT-Silizium-basierten Stromrichter betriebenen elektrischen Maschinen, die komplett auf einem polymeren Blend gemäß einer Ausführungsform der Erfindung basieren, verbesserte Isoliersystemdesigns, welche die Isolationsdicke sogar reduzieren und somit die Wärmeabfuhr gegenüber herkömmlichem Isoliersystemdesign begünstigen.

Somit ließe sich sogar sowohl bei IGBT als auch bei z.B. SiC basierten WR-Technologien sogar eine Reduktion der Baugröße eines Traktionsmotors bei gleicher Leistung gegenüber dem Status Quo realisieren.

Des Weiteren ließe das Material auch die Auslegung von Isoliersystemen zu, die für eine höhere Zwischenkreisspannungsklasse (z.B. 3 oder auch 4 kV), die bislang aufgrund der begrenzten elektrischen Lebensdauer von glimmerbasierten Isoliersystemen ohne Glimmschutzsystem verwehrt blieben.

Die teilweise und vor allem die vollständige Substitution von Glimmer in Isolationen von über Stromrichter betriebenen elektrischen Maschinen durch Siloxan modifizierte Thermoplasten hat neben der oben im Zusammenhang mit dem Abbau und Transport des in Indien und Madagaskar natürlich vorkommenden Glimmers und mit der im Zusammenhang mit Permittivität beschriebenen allgemeinen Verbesserung des Isolationswerkstoffes durch Erhöhung von Belastbarkeit und Designfreiheit noch den weiteren Vorteil, dass die Verarbeitbarkeit einem Glimmerwerkstoff in keiner Weise nachsteht, sondern sogar wirtschaftlicher ist.

Dabei können alle relevanten Glimmerkomponenten im Isolationssystem mit dem vorgeschlagenen Blend mit Siloxan-modifizierten Thermoplasten ersetzt werden. Die Herstellung von Folien aus dem Siloxan-modifizierten Thermoplast-Blend ist durch den Prozess der Extrusion sehr kostengünstig und einfach. Die eventuell notwendige Weiterverarbeitung der Folien zu Laminaten -vergleichbar zu den im Stand der Technik üblichen Weiterverarbeitung der Glimmerpapiere zu Laminaten- ist sehr einfach möglich. Auch die Weiterverarbeitung zu schmalen Rollen als Isolierbandersatz sowie zu Breitbahn als Materialbasis für einen Formpressprozess ist möglich. Grundsätzlich können die Biegeradien der genannten thermoplastischen Isolation enger als die einer glimmerhaltigen Isolation gewählt werden, da die Materialdehnungen der Blends mit Siloxan-modifiziertem Thermoplasten deutlich höher als die der Glimmerband-Laminate sind.

Daraus können weitere konstruktive Vorteile entstehen. Zusätzlich sind durch das Spritzgießen und/oder Formpressen auch zusätzliche Verarbeitungsmethoden entstanden, die sehr einfach eine glimmerhaltige Hauptisolation ersetzen. Bislang wird die Hauptisolation durch Glimmerbandbewicklung der Spule, anschließenden Imprägnierprozess und wiederum anschließendes Aushärten aufwändig und teuer hergestellt.

Des Weiteren ist die Substitution Isolierfolien in Deckbändern denkbar. Hierbei würde eine zusätzliche teilentladungsresistente Komponente in die Isolierstrecken der Hauptisolierung und der Phasenisolierung ins Isoliersystem kommen, welche die elektrische Lebensdauer noch einmal zusätzlich erhöht.

Wird der polymere Blend als dicke Folie extrudiert, so kann auch eine Nutauskleidung hergestellt werden, in dem die Folie alleine, oder auch als Laminat, eingebettet zwischen zwei meta Aramid-Papieren angeordnet ist. Da in Traktionsisoliersystemen nach Stand der Technik Nutauskleidungen keinen Glimmer enthalten, könnte man durch Substitution der Polyimidfolie des Laminats durch Folie auf Polyetherimid-Siloxan-CopolymerblendBasis eine Teilentladungsresistente Komponente ins Isoliersystem hinein-designen, welche die Hauptisolierung zusätzlich verstärkt.

Nach Stand der Technik werden in dieser Isolationsstrecke im Traktionsdesign Polyimid-basierte Folienumspinnung und Lacke verwendet, die auch coronabeständige Additive enthalten können. Elektrische Alterungsabschätzungen deuten auch hier einen deutlichen Lebensdauergewinn durch die Verwendung von Werkstoffen auf Polyetherimid-Siloxan-Copolymer-Basis an.

Da sich die Potentialdifferenz an der Windungsisolierung am stärksten durch Betrieb am z.B. SiC,-Stromrichter erhöht, bietet es sich auch hier an, die glimmerhaltige Windungsisolierung durch eine extrudierte Drahtisolation gemäß einem Ausführungsbeispiel der vorliegenden Erfindung, z.B. auf -beispielsweise - Polyetherimid-Siloxan-Copolymer-Basis - zu substituieren.

Drahtextrusion auf Hochtemperaturthermoplast-Basis ist ein am Markt bewährtes Fertigungsverfahren für Flachdrähte, die in der Luft und Raumfahrt als auch im Automobilbereich bei beispielweise Hairpin-Wicklungen eingesetzt werden.

Die Erfindung betrifft eine Verwendung einer Isolation einer elektrischen rotierenden Maschine in Kombination mit bestimmten Stromrichtern, insbesondere mit IGBT und/oder Siliziumcarbid "SiC" basierten Stromrichtern, wie sie z.B. zum Antrieb von Schienenfahrzeugen eingesetzt werden, sowie eine damit ausgerüstete elektrische rotierende Maschine. Die hier im Fokus stehenden elektrischen rotierenden Maschinen haben bislang alle stark Glimmer-haltige Isolationen, mit Anteilen an Glimmerpapier von 45Vol% oder mehr. Insbesondere sind elektrische rotierende Maschinen, welche nach IEC 60034-18-42 unter Auftreten von Teilentladungen betrieben werden, Gegenstand der vorliegenden Anmeldung. Durch die hier erstmals vorgeschlagene Kombination ist es möglich, bei Isolationen von über Stromrichter in IGBT-Technik oder auf Halbleiter mit Bandabstand größer Silizium-Basis wie z.B. SiC und/oder GaN-technischer Basis, betriebene rotierende elektrische Maschinen, wie Traktionsmotoren, Glimmer zu reduzieren, respektive auf Glimmer weitgehend oder ganz zu verzichten.

## Patentansprüche

1. Verwendung einer Isolation, die einen polymeren Blend mit einem Siloxan-modifizierten Thermoplasten umfasst für eine, über einen Stromrichter auf IGBT-Silizium-Basis oder Halbleiter mit Bandabstand größer Silizium- Basis betriebene, elektrische rotierende Maschine.

2. Verwendung einer Isolation nach Anspruch 1, die weniger als 30 Vol% Glimmer umfasst.

3. Verwendung einer Isolation nach Anspruch 1 oder 2, die glimmerfrei, mit einem Anteil an Glimmer kleiner 1 Vol%, ist.

4. Verwendung einer Isolation nach einem der vorhergehenden Ansprüche, bei der das Siloxan-modifizierte Thermoplast-Blend ein Polyetherimid-Siloxan-Copolymer-Thermoplasten umfasst.

5. Verwendung einer Isolation nach einem der vorhergehenden Ansprüche, bei der der atomare Anteil an Silizium-Atomen im Siloxan-modifizierten-Copolymer-Thermoplasten im Bereich von 1% bis 25% liegt.

6. Verwendung einer Isolation nach einem der vorhergehenden Ansprüche, wobei im polymeren Blend der Isolation ein amorpher Thermoplast vorliegt.

7. Verwendung einer Isolation nach einem der vorhergehenden Ansprüche, wobei im polymeren Blend der Isolation ein teilkristalliner Thermoplast vorliegt.

8. Verwendung einer Isolation nach einem der vorhergehenden Ansprüche, wobei im polymeren Blend der Isolation PEK, ein schwefelhaltiges Polymer und/oder PEI mit einem Polyetherimid-Siloxan-Copolymer geblendet vorliegt.

9. Verwendung einer Isolation nach einem der vorhergehenden Ansprüche, wobei im polymeren Blend der Isolation auch schwefelhaltiger Thermoplast umfasst ist.

10. Verwendung einer Isolation nach einem der vorhergehenden Ansprüche, wobei im polymeren Blend der Isolation Additive enthalten sind.

11. Elektrische Maschine, herstellbar unter Verwendung einer Isolation nach einem der Ansprüche 1 bis 10, die über Stromrichter in IGBT-Technologie betrieben wird.

12. Elektrische Maschine herstellbar unter Verwendung einer Isolation nach einem der Ansprüche 1 bis 10, die über Stromrichter auf Basis eines Halbleiters mit Bandabstand größer Silizium -Technologie, wie z.B. SiC, betrieben wird.

13. Elektrische Maschine nach einem der Ansprüche 11 oder 12, die ein Traktionsmotor ist.

14. Elektrische Maschine nach Anspruch 13, die ein Traktionsmotor eines Schienenfahrzeugs ist.
